# EUROPEAN PATENT APPLICATION

(11) **EP 2 692 973 A1**
(43) Date of publication of application: **05.02.2014**
(21) Application number: 12178741.0
(22) Date of filing: 31.07.2012
(51) Int. Cl.: E05C 19/16, E05B 63/14, E05B 17/00, B64C 1/14

(54) **Door alignment and locking system**

(71) Applicant: Airbus Operations GmbH, 21129 Hamburg (DE)
(72) Inventor: Koch, Maik, 28865 Lilienthal (DE); Poth, Albin, 27798 Hude (DE)
(74) Representative: Isarpatent

(57) **Abstract**

The present invention provides a door alignment and locking system (1) for holding a door (11) in a closed and/or locked state, the system comprising: at least one first magnet (2) to be mounted in or on a movable door member (11) of a door assembly (10), and at least one second magnet (4) to be mounted in or on a fixed frame member (13) of the door assembly (10) in proximity to the first magnet (2) when the door member (11) is in a closed position. The first magnet (2) and the second magnet (4) are arranged such that poles of the first magnet (2) are substantially aligned with poles of the second magnet (4) when the door member (11) is in the closed position.

## Description

The present invention relates to a door alignment and locking system, especially for holding a door in a closed and locked condition, as well as to a door assembly incorporating such a system.

The door alignment and locking system of this invention is particularly designed for use in aircraft so that doors to restricted parts of the aircraft, such as to a cockpit or crew quarters, may be held closed and/or locked to prevent unauthorised access. While it will be convenient to describe the invention in this exemplary context, it will nevertheless be appreciated that the door alignment and locking system and door assembly according to the invention are not limited to this application, but may be employed in a wide variety of situations, and indeed, with almost any door, gate, or barrier that shuts or closes a doorway, opening or portal.

Doors to compartments in aircraft are subject to structural constraints that are seldom found in other environments. In particular, the doors in aircraft are often not mounted in a structurally stable door frame, as is typical in a building or house. Rather, the structure that forms a frame for doors in aircraft is often dynamic and subject to flexing and other deformations as the fuselage structure of the aircraft flexes and moves in use. Also, the light-weight design constraints typical of commercial aircraft result in a minimalist design philosophy, which omits as many unnecessary weighty elements as possible. This often results in a relatively simple frame structure, which may be limited to a single door post or vertical member at one side of the door, with the door otherwise hinged directly to an adjacent wall panel. These design constraints, including deformation and flexing of the frame, can lead to wear, chaffing, and misalignment of the parts of a door assembly in an aircraft.

Although the use of magnets in door latches and locks may be generally known, a need nevertheless exists for improvements which can minimize the prospects of jamming of mechanical components caused by wear, chaffing, and/or misalignment of parts in a door locking system and door assembly.

It is therefore an object of the invention to provide a new and improved door alignment and locking system, especially for holding a door member in a closed and/or locked state in an aircraft, and a door assembly including such an alignment and locking system.

In accord with the invention, a door alignment and locking system having features recited in claim 1 and a door assembly as recited in claim 8 are provided. Preferred features of the invention are recited in the dependent claims.

According to one aspect, therefore, the invention provides a door alignment and locking system for holding a door in a closed and/or locked state, the system comprising:
at least one first magnet to be mounted in or on a movable door member of a door assembly, and
at least one second magnet to be mounted in or on a fixed frame member of the door assembly in proximity to the first magnet when the door member is in a closed position,
wherein the first magnet and the second magnet are arranged such that at least one pole of the first magnet is substantially aligned with at least one pole of the second magnet when the door member is in the closed position.

By arranging the first and second magnets such that at least one of the poles of the first magnet is in proximity to and aligned with at least one of the poles of the second magnet when the door is in the closed position, the magnetic fields of the first and second magnets can interact effectively to bias the door member to the closed position. The respective poles of the first and second magnets which are in proximity and aligned with each other are therefore opposite poles for exerting an attraction between the first and second magnets and thus between the movable door member and the fixed frame member. In a preferred embodiment, both poles of the first magnet may be substantially aligned with the respective poles of the second magnet when the door member is in the closed position. In this regard, alignment of the poles may be along or substantially parallel to an alignment axis.

In a preferred embodiment, one of the first magnet and the second magnet is a permanent magnet, and the other of the first magnet and the second magnet is an electromagnet which can be switched between an activated state and a deactivated state. Accordingly, the electromagnet may be switched to an activated state to align and/or lock the movable door member in the closed position. When the electromagnet is switched to an activated or energised state, the magnetic field generated is able to interact with the magnetic field of the permanent magnet by virtue of the proximity and alignment of the poles when the door member is in the closed position. In this way, as the door member approaches or is near the closed position, the interacting magnetic fields of the first and second magnets generate forces that act to move the door member into the closed position and to hold the door member fixed or locked in that position.

The inventive concept is thus able to provide an alternative door alignment and locking system for the cockpit door of an aircraft based upon a specific combination of permanent and electromagnetic components, with which misalignment caused by relative movements of an associated cabin frame or modules and/or jamming of mechanical components due to a misalignment can be substantially eliminated. By employing magnets in this way, the risk of jamming of components of the door alignment and locking system due to wear, chaffing and/or misalignment can be substantially minimised.

In a preferred embodiment, the permanent magnet is adapted to pre-align the door in a closed position and may also act to hold the door in the closed position while the electromagnet is deactivated or unpowered. In this respect, the permanent magnet may interact with a ferromagnetic core of the electromagnet although the electromagnet is in a deactivated state or condition. When activated or energised, on the other hand, the electromagnet is able to lock the door, and may also act to attract or align the door to the closed position if it is almost, but not yet fully closed. The door member itself may preferably comprise a non-ferromagnetic material, such as a fibre-reinforced composite material (e.g. a glass- or carbon-fibre reinforced polymer material) now popular in aircraft construction. In this way, the first and second magnets are only influenced by and/or interact with each other. According to an especially preferred embodiment, the at least one first magnet is a permanent magnet and the at least one second magnet is an electromagnet. In this way, associated wiring for power supply to the electromagnet(s) can be incorporated in the frame member adjacent the movable door. Furthermore, construction of the door member becomes much simpler, as one need only mount or fix the permanent magnet(s) at the desired location(s), e.g. at an edge region of the door member.

In a preferred embodiment, the proximity of the first magnet to the second magnet is in the range of about 0.1 mm to 10 mm and preferably in the range of about 1 mm to 5 mm, when the door member is in the closed position. Naturally, a closer proximity between the first and second magnets in the closed position of the door generates a more pronounced effect. On the other hand, providing a sufficient clearance allows for deformation and flexing of the frame structure in service.

In a preferred embodiment, the system comprises a plurality of first magnets to be mounted spaced apart along the edge region of the door member and a plurality second magnets to be mounted correspondingly spaced apart along the frame member. The first and second magnets may therefore be grouped in pairs spaced apart along the height or length of the door. The first and second magnets are to be arranged such that at least one pole of each of the first magnets is substantially aligned with at least one pole of a respective second magnet when the door member is in the closed position.

In a particularly preferred embodiment, the door alignment and locking system includes a control unit for controlling operation of the electromagnet(s). In this connection, the control unit may include a user interface, such as a button, a key-pad or screen, with which an operator may activate or deactivate the electromagnet(s) - i.e. by switching same "on" or "off". By switching the electromagnet to an activated or energised state, the electromagnet generates a magnetic field and magnetic force which interacts with the permanent magnet to align and to lock the door member in the closed position. If the door alignment and locking system is for a restricted zone or compartment of an aircraft, the user interface may require input of a security code before the electromagnet(s) is/are deactivated or de-energised to allow access. To exit from inside a restricted zone or compartment, on the other hand, no security code may be required. Instead, the pressing of a simple dedicated button may suffice.

The door alignment and locking system may further include a sensor or detector means for sensing or detecting a position of the door and providing data on the position of the door to the control unit. In this way, the system may be configured to automatically activate or energise the electromagnet(s) depending on a position of a door member (e.g. when the door member is an "almost closed" position). Further, the system may be adapted to provide a warning signal in the event that the door remains open or is not in the fully closed position for any excessive period of time, especially when the door is to a restricted zone. The warning signal may include a visual (e.g. light) signal or an aural (e.g. bell or buzzer) signal.

The advantages of the door alignment and locking system of the invention are several and include: mechanically tolerant locking technique that is able to compensate for misalignment and relative movement of cabin modules resulting in improved reliability and reduced noise emission; reduction of electric power consumption in general; holding of the door in a closed position while unlocked; and a self-aligning operation. The features of decompression release required for a cockpit door remain unaffected. In the event of a rapid decompression, the electric power could be cut and the door would free to open according to the current design. Depending on an application, if deemed necessary the door alignment and locking system may optionally also detect a position of the door.

According to another aspect, the invention provides a door assembly comprising a door member which is pivotally movable with respect to a frame member between an open position and a closed position, and a door alignment and locking system with at least one first magnet mounted on or in an edge region of the door member, and at least one second magnet mounted on or in the frame member adjacent an edge of the door member such that at least one pole of the second magnet is substantially aligned with at least one pole of the first magnet when the door member is in the closed position.

According to a further aspect, the invention also provides an aircraft or spacecraft comprising a door assembly or a door alignment and locking system of the invention as described above with respect to any of the embodiments.

For a more complete understanding of the invention and the advantages thereof, exemplary embodiments of the invention are explained in more detail in the following description with reference to the accompanying drawing figures, in which like reference characters designate like parts and in which:
- Fig. 1: is a schematic view of a door alignment and locking system according to an embodiment of the invention in an aligned and/or locked state;
- Fig. 2: is a schematic view of the system of Fig. 1 in a self-aligning operation;
- Fig. 3: is a schematic view of a door assembly according to an embodiment of the invention;
- Fig. 4: is a schematic view of a door assembly according to another embodiment of the invention; and
- Fig. 5: shows an aircraft according to an embodiment of the invention.

The accompanying drawings are included to provide a further understanding of the present invention and are incorporated in and constitute a part of this specification. The drawings illustrate particular embodiments of the invention and together with the description serve to explain the principles of the invention. Other embodiments of the invention and many of the attendant advantages of the invention will be readily appreciated as they become better understood with reference to the following detailed description.

It will be appreciated that common and well understood elements that may be useful or necessary in a commercially feasible embodiment are not necessarily depicted in order to facilitate a less abstracted view of the embodiments. The elements of the drawings are not necessarily illustrated to scale relative to each other. It will further be appreciated that certain actions and/or steps in an embodiment of a method may be described or depicted in a particular order of occurrences while those skilled in the art will understand that such specificity with respect to sequence is not necessarily required. It will also be understood that the terms and expressions used in the present specification have the ordinary meaning as it accorded to such terms and expressions with respect to their corresponding respective areas of inquiry and study, except where specific meanings have otherwise been set forth herein.

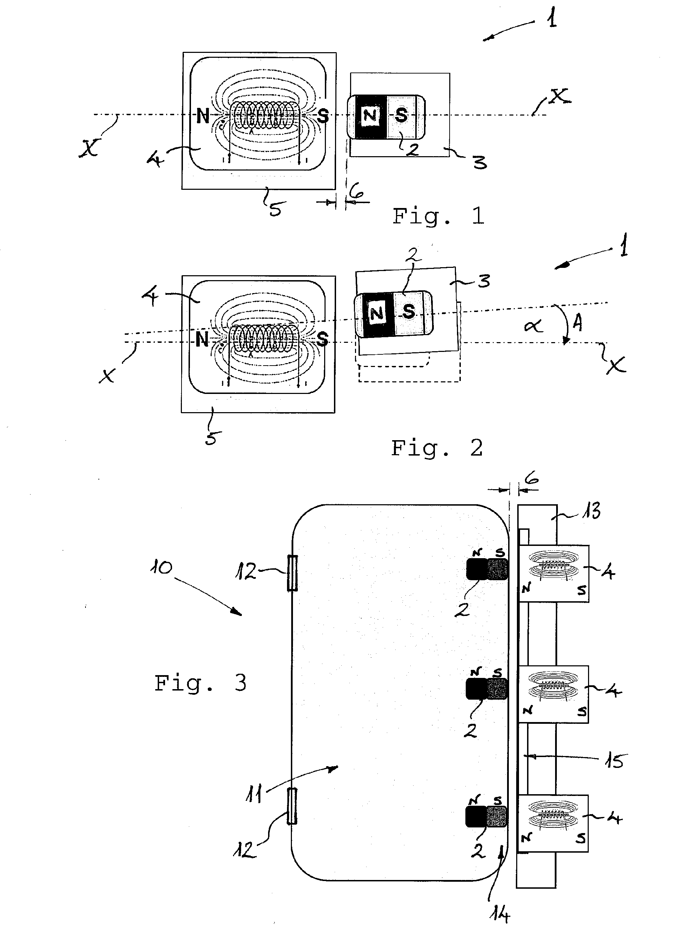

With reference firstly to Figs. 1 and 2 of the drawings, a door alignment and locking system 1 according to a preferred embodiment is illustrated for holding a door in a closed and preferably also locked state or condition. The alignment and locking system 1 includes a first magnet 2 in the form of a permanent magnet, which is provided in a protective casing 3 (of non-ferromagnetic material) and which is to be attached in or on an edge region of a door member of a door assembly. The alignment and locking system 1 further includes a second magnet 4 in the form of an electromagnet that is also housed in a non-ferromagnetic protective casing 5, and which is to be attached in or on a substantially fixed frame member of the door assembly spaced in close proximity to the permanent magnet 2 by an air gap 6 when the door member is in a closed position. The air gap 6 may, for example, be in the range of about 0 mm to 2 mm. Further, the first (permanent) magnet 2 and the second (electro-) magnet 4 are arranged such that the poles N, S of the first magnet 2 are substantially aligned with the poles N, S of the second magnet 4 along an axis X when the door member is in the closed position, as shown in Fig. 1. In this regard, the first and second magnets 2, 4 are arranged so that their respective poles in closest proximity are of opposite polarity and thereby exert attractive forces upon one another. The door can be held in the closed position in a locked state, i.e. secured against unauthorized opening, when the electromagnet 4 is energized or powered. The door can also be held in the closed position in a unlocked state when the electromagnet 4 is deactivated or unpowered. In this case, the door is nevertheless kept closed and aligned by the interaction between the permanent magnet 2 and ferromagnetic parts (e.g. the core) of the electromagnet 4.

As can be seen in Fig. 2, if the door member with the first (permanent) magnet 2 is out of alignment by an angle α from the axis X, such that the door is not quite in the closed position, when the electromagnet 4 is activated or energised, the magnetic fields of the first and second magnets 2, 4 are adapted to interact and thereby to bias and move the door member in the direction of arrow A into the aligned and fully closed position of Fig. 1. Accordingly, even if the door is misaligned (i.e. the door is not fully closed), the system 1 is designed to actively bring or move the door into the closed position. This self-aligning is a result of the fact that the permanent magnet 2 and the electromagnet 4 (when activated or energised) dominantly align and orientate in the same direction. The effect is scalable depending on the magnetic field strength. A misaligned door will therefore be automatically brought into the closed position (self-aligned) and locked while electromagnet is powered.

With reference to Fig. 3, an embodiment of a door assembly 10 according to the invention incorporating a door alignment and locking system 1 of the type in Figs. 1 and 2 is illustrated. In this particular embodiment, the door assembly includes a door member 11 which is mounted on hinges 12 for pivoting movement relative to a substantially fixed frame member 13 in the form of a vertical post. In this case, the door alignment and locking system 1 includes three first magnets 2 (provided as permanent magnets) mounted spaced apart along a free edge region 14 of the door member 11 and three second magnets 4 (provided as electromagnets) mounted correspondingly spaced apart along the frame post 13 adjacent a respective to one of the first magnets 2 and proximate via an air gap 6 when the door member 11 is in the closed position as shown in Fig. 3. In this position, the respective pairs of first and second magnets 2, 4 are again arranged such that their poles N, S are substantially aligned along or parallel to an axis X and the closer or more proximate poles in each pair of first and second magnets 2, 4 are of opposite polarity. The door member 11 and the frame post 13 are typically constructed of a non-ferromagnetic material, such as a fibre-reinforced polymer composite. However, the door member 11 and/or frame member 13 may include a strip or band 15 of ferromagnetic material on or along respective facing edges thereof to distribute the magnetic fields generated by the first and second magnets 2, 4, respectively. The door assembly 10 of Fig. 3 shows the door alignment and locking system 1 in application without any mechanical end stop. Thus, if the electromagnets 4 are not powered, the closed position is only defined or ensured by the permanent magnets 2 and the ferromagnetic core of the electromagnets 4. An operational limitation (end stop) can be supported by the frame member 13 and/or the hinges 12.

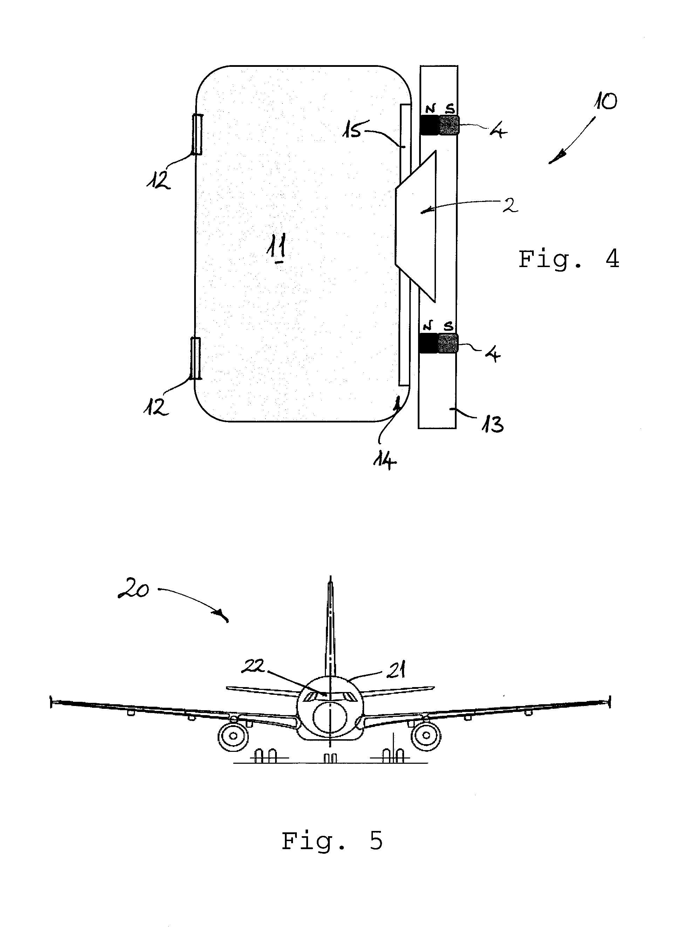

Referring to Fig. 4 of the drawings, a different embodiment of a door assembly 10 according to the invention is shown with a door alignment and locking system 1 having a different implementation approach. The operational philosophy remains unchanged but in this case the first magnet 2 is provided as an electromagnet in contact with the ferromagnetic material strip 15 along the edge region 14 of the door member 11 and the second magnets 4 are permanent magnets provided in the frame member or post 13. Accordingly, this solution proposes to implement the electrical components - the electromagnet and its associated wiring - on the movable door member 11. In the layout of the system 1 in Fig. 4 the number of permanent magnets and electromagnets could vary.

By virtue of the specific combination of the first and second magnets 2, 4, the door alignment and locking system 1 of the invention is able to self-align and hold the door member 11 closed and locked when the electromagnet is powered or energised, and to release the door member 11 for opening when the electromagnet is deactivated or unpowered.

Finally, an aircraft 20 is shown schematically in Fig. 5 that incorporates a door assembly 10 and thus a door alignment and locking system 1 as described in detail above with reference to the embodiments of Figs. 1-4 in a frame structure of its fuselage 21 for controlling access to compartments or zones of the aircraft, such as the cockpit 22.

Although specific embodiments of the invention have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

In this document, the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

### List of Reference Signs

- 1: door alignment and locking system
- 2: first magnet or permanent magnet
- 3: casing
- 4: second magnet or electromagnet
- 5: casing
- 6: air gap
- 10: door assembly
- 11: door member
- 12: hinge
- 13: frame member
- 14: edge region of door member
- 15: strip or band
- 20: aircraft
- 21: fuselage structure
- 22: cockpit
- α: angle of misalignment
- X: alignment axis
- A: arrow

## Claims

1. A door alignment and locking system (1) for holding a door (11) in a closed and/or locked state, comprising:
at least one first magnet (2) to be mounted in or on a movable door member (11) of a door assembly (10), and
at least one second magnet (4) to be mounted in or on a fixed frame member (13) of the door assembly (10) in proximity to the first magnet (2) when the door member (11) is in a closed position,
wherein the first magnet (2) and the second magnet (4) are arranged such that at least one poles (N, S) of the first magnet (2) is substantially aligned with at least one pole (N, S) of the second magnet (4) when the door member (11) is in the closed position.

2. A door alignment and locking system (1) according to claim 1, wherein both poles (N, S) of the first magnet (2) are substantially aligned with at least one pole (N, S), and preferably both poles, of the second magnet (4) along an axis (X) when the door member (11) is in the closed position.

3. A door alignment and locking system (1) according to claim 1 or claim 2, wherein one of the first magnet (2) and the second magnet (4) is a permanent magnet, and the other of the first magnet (2) and the second magnet (4) is an electromagnet which can be switched between an activated state and a deactivated state.

4. A door alignment and locking system (1) according to claim 3, wherein, the electromagnet is controlled to be switched to an activated state to align and/or lock the movable door member (11) in the closed position.

5. A door alignment and locking system (1) according to any one of the preceding claims, wherein the proximity of the first magnet (2) to the second magnet (4) when the door member (11) is in a closed position is in the range of about 0.1 mm to 10 mm, and preferably in the range of about 1 mm to 5 mm.

6. A door alignment and locking system (1) according to any one of the preceding claims, comprising a plurality of first magnets (2) to be mounted spaced apart along the edge region (14) of the door member (11) and a plurality second magnets (4) to be mounted correspondingly spaced apart along the frame member (13), whereby the first and second magnets are arranged such that at least one pole (N, S) of each of the first magnets (2) is substantially aligned with at least one pole (N, S) of a respective one of the second magnets (4) when the door member (11) is in the closed position.

7. A door assembly (10) comprising a door member (11) which is pivotally movable with respect to a frame member (13) between an open position and a closed position, and a door alignment and locking system (1), wherein the door alignment and locking system (1) comprises at least one first magnet (2) mounted on or in an edge region (12) of the door member (11) and at least one second magnet (4) mounted on or in the frame member (13) adjacent an edge region (14) of the door member (11) such that at least one pole (N,S) of the second magnet (4) is substantially aligned with at least one pole (N, S) of the first magnet (2) when the door member (11) is in the closed position.

8. A door assembly (10) according to claim 7, wherein both poles (N, S) of the first magnet (2) are substantially aligned with at least one pole (N, S), preferably both poles, of the second magnet (4) along an axis (X) when the door member (11) is in the closed position.

9. A door assembly (10) according to claim 7 or claim 8, wherein one of the first magnet (2) and the second magnet (4) is a permanent magnet and the other of the first magnet (2) and the second magnet (4) is an electromagnet which is switchable between an activated state and a deactivated state.

10. A door assembly (10) according to claim 9, further including a control unit for switching the electromagnet to an activated state to align and/or to lock the door member (11) in the closed position.

11. A door assembly (10) according to any one of claims 7 to 10, comprising a plurality of first magnets (2) mounted spaced apart along said edge region (14) of the door member (11) and a plurality second magnets (4) mounted spaced along the frame member (13), wherein at least one pole of each of the first magnets (2) is substantially aligned with at least one pole of a respective one of the second magnets (4) when the door member (11) is in the closed position.

12. A door assembly (10) according to any one of claims 7 to 11, wherein the proximity of the first magnet (2) to the second magnet (4) when the door member (11) is in a closed position is in the range of about 0.1 mm to 10 mm, and preferably in the range of about 1 mm to 5 mm.

13. An aircraft or spacecraft (20) having a door assembly (10) according to any one of claims 7 to 12.
